# EUROPÄISCHE PATENTSCHRIFT

(11) **EP 1 201 941 B1**
(45) Veröffentlichungstag und Bekanntmachung des Hinweises auf die Patenterteilung: **27.04.2005**
(21) Anmeldenummer: 01811001.5
(22) Anmeldetag: 15.10.2001
(51) Int. Cl.: F16B 37/04

(54) **Schienenanbinder**
Rail connecting device
Dispositif d'attachement pour rail

(30) Priorität: 23.10.2000 DE 10052534
(43) Veröffentlichungstag der Anmeldung: 02.05.2002
(73) Patentinhaber: HILTI Aktiengesellschaft, 9494 Schaan (LI)
(72) Erfinder: Herb, Armin, 86974 Apfeldorf (DE); Hoffmann, Armin, 86899 Landsberg (DE)
(74) Vertreter: Wildi, Roland

(56) Entgegenhaltungen:
- EP-A- 0 928 902
- NL-C- 1 005 552
- US-A- 4 830 531
- US-A1- 2001 004 099

## Beschreibung

Die Erfindung betrifft ein Befestigungselement mit einem Hintergriffteil, welches in eine Montageöffnung eines Hohlkörpers einführbar und im Hohlkörperinnern derart verdrehbar ist, dass das Hintergriffteil an gegenüberliegenden Hohlkörperlängsseiten innenseitig vorgesehene Haltevorsprünge hintergreift, sowie mit zumindest einen Anschlag, welcher die die Montageöffnung begrenzenden Ränder der Hohlkörperlängsseiten stimaussenseitig beaufschlagt und welcher mit dem Hintergriffteil verbunden ist und durch ein senkrecht zum Anschlag wirkendes, vorgespanntes Federelement gegenüber dem Hintergriffteil unter Überwindung der Federkraft elastisch gelagert ist.

Befestigungselemente der genannten Art dienen zum Befestigen eines Gegenstandes beispielsweise auf einer C-förmigen Montageschiene. Die zur Anwendung gelangende Montageschiene kann hierzu beispielweise an einem Untergrund befestigt sein. Das Befestigungselement wird in die Montageöffnung eingeführt und beispielsweise um 90° verdreht. Dadurch hintergreift das Befestigungselement die Haltevorsprünge der Montageschienen. In dieser Vorfixierung ist es möglich das Befestigungselement in Längsrichtung der Montageschiene zwecks Justierung zu verschieben. Um eine endgültige Befestigung des Befestigungselementes an der Montageschiene zu bewirken, wird das Hintergriffteil gegenüber dem Anschlag, beispielsweise durch eine Gewindestange, verspannt und damit an den Haltevorsprüngen festgeklemmt. Diese Gattung von Befestigungselementen eignet sich beispielsweise zum Befestigen von länglichen Gegenständen wie Rohren oder dergleichen.

Eine derartiges Befestigungselement ist beispielsweise in der DE 197 36 933 A1 offenbart. Dieses bekannte Befestigungselement mit einem Bolzen weist einen Hintergriffteil auf, das derart verdrehbar ist, dass dieses an einer Montageschienen angeordnete Haltevorsprünge hintergreift. Die Haltevorsprünge der Montageschiene sind zwischen dem Hintergriffteil und einem axial zu Bolzen verschiebbar gelagerten Anschlag mittels einem Mutterelement festlegbar. Um eine Vorfixierung zu ermöglich, ist zwischen dem Mutterelement und dem Anschlag ein vorgespanntes Federelement angeordnet. Das Federelement bewirkt, dass das Hintergriffteil durch die Federkraft gegen den Anschlag gezogen wird und damit die Haltevorsprünge zwischen dem Hintergriffteil und dem Anschlag leicht festgeklemmt werden, insbesondere das bekannte Befestigungselement an der Montageschiene vorfixiert wird. Durch ein Verschieben des Befestigungselementes längs der Montageschiene kann die Position justiert werden. Die Position des Befestigungselementes gegenüber der Montageschiene wird durch Festschrauben des Mutterelementes auf dem Bolzen festgelegt. Die Mutter übernimmt dabei die Funktion des Federelementes und verspannt die Haltevorsprünge der Montageschiene zwischen dem Anschlag und dem Hintergriffteil.

In der NL 100552 C ist ein weiteres Befestigungselement mit einem Anschlag, einem senkrecht zum Anschlag wirkenden, vorgespannten Federelement und einem Hintergriffteil gezeigt, welches in eine Montageöffnung eines Hohlkörpers einführbar und im Hohlkörperinnem derart verdrehbar ist, dass das Hintergriffteil an gegenüberliegenden Hohlkörperlängsseiten innenseitig vorgesehene Haltevorsprünge hintergreift. An dem Anschlag sind Vorsprünge ausgebildet, welche das Hintergriffteil im Montagestand halten. Beim Verdrehen des Hintergreifteils gleitet dieses von den Vorsprüngen und verklemmt sich mit den Haltevorsprüngen des Hohlkörpers.

Vorteilhaft an den bekannten Lösungen ist, dass die Justierung bei vorfixiertem Befestigungselement vorgenommen werden kann. Durch Aufbringen einer der Federkraft entgegenwirkenden Kraft auf den Bolzen wird die Vorfixierung gelöst und das Befestigungselement kann in Längsrichtung der Montageöffnung justiert werden. Fällt die auf den Bolzen wirkende Kraft weg, ist das Befestigungselement wieder mit der Montageschiene vorfixiert.

Nachteilig an den bekannten Lösungen ist, dass der Hammerkopf nach dem Einführen in die Montageöffnung der Montageschiene um einen bestimmten Winkel, beispielsweise 90°, mittels des Bolzens verdreht werden muss, um die Haltevorsprünge optimal zu hintergreifen. Insbesondere an schlecht zugänglichen Stellen wirkt sich dieser Umstand nachteilig aus, da ein Anwender keine Kontrollmöglichkeiten besitzt, um festzustellen, ob der Hammerkopf gegenüber den Haltevorsprüngen um dem vorbestimmten Winkel verdreht ist. Gerade bei Befestigungselementen, welche unter dynamischer Belastung stehen, kann dies zu einem Versagen der Befestigung zwischen der Montageschiene und dem bekannten Befestigungselement führen.

Der vorliegenden Erfindung liegt die Aufgabe zugrunde, ein Befestigungselement mit einem verdrehbaren Hintergriffteil zu schaffen, das eine Vorfixierung erlaubt, welche eine korrekte Positionierung des Hintergriffteils gegenüber den Haltevorsprüngen sicherstellt. Ferner soll das Befestigungselement handlich sein und eine einfache Montage zu gewährleisten.

Erfindungsgemäss wird die Aufgabe dadurch gelöst, dass der Anschlag ein Kupplungsteil und das Hintergriffteil ein Gegenkupplungsteil aufweist, die lösbar drehfest miteinander verbindbar eine Kupplung bilden.

Dadurch, dass der Anschlag und das Hintergriffteil miteinander gekuppelt sind, sind die möglichen Positionen des Hintergriffteils gegenüber den Haltevorsprüngen vorbestimmt, insbesondere ist der Winkel zwischen dem Anschlag und dem Hintergriffteil festgelegt. Das heisst, für einen Anwender ist die Position des Hintergriffelementes im gekuppelten Zustand eindeutig. Wesentlich ist, dass der Anschlag gegenüber der Montageschiene, insbesondere den Haltevorsprüngen, im wesentlichen drehfest gelagert ist, um eine eindeutige Position des Hintergriffteils gewährleisten zu können. Beispielsweise dient ein zu befestigender Gegenstand, insbesondere ein Winkelement, als Anschlag.

Die Kupplung weist Klauen und Nuten auf, die in einer Eingriffsposition formschlüssig zusammenwirken und durch eine Relativbewegung senkrecht zum Anschlag, zwischen einer Freigabeposition und zumindest einer Eingriffsposition stellbar sind, wobei die Kupplung im Ruhezustand mittels des Federelementes in einer Eingriffsposition gehalten wird. Damit ist es dem Anwender auf einfache Art und Weise möglich in der Freigabeposition der Kupplung zwischen verschiedenen Kupplungspositionen, insbesondere verschiedene Winkeln zwischen Hintergriffteil und Montageöffnung, zu stellen. In einer bevorzugten Ausführung ist die Kupplung zylinderförmig ausgebildet, wobei die Achse der Kupplung etwa mittig zur Breite der Montageöffnung und senkrecht zum Anschlag verläuft. Die Breite ist dabei als die Erstreckung quer zur Längsrichtung der Montageschienenöffnung zu verstehen.

Die Kupplung weist zumindest zwei Eingriffspositionen auf, eine Einführposition und eine Sicherungsposition, wobei der Abstand (a) zwischen Anschlag und Hintergriffteil in der Einführposition zumindest der Erstreckung (b) der Haltevorsprünge senkrecht zum Anschlag und in der Sicherungsposition höchstens der Erstreckung (b) entspricht. Somit ist es dem Anwender möglich, in der Einführposition der Kupplung das Befestigungselement durch die Montageöffnung der Montageschiene hindurchzuführen und durch Stellen der Kupplung in die Freigabestellung das Hintergriffteil durch Verdrehen in die hintergreifende Position zu stellen. Ist eine oder die vorbestimmte Position des Hintergriffteils relativ zu den Haltevorsprüngen erreicht, kann wieder in die Sicherungsposition gekuppelt werden. In einer bevorzugten Ausführungsform weist die Kupplung zwei Eingriffspositionen auf, eine Einführposition und eine Sicherungsposition. Dadurch gestaltet sich die Handhabung für den Anwender besonders einfach. Die Sicherungsposition ist derart gegenüber der Montageschienenöffnung, insbesondere gegenüber den Haltevorsprüngen, definiert, dass die Befestigung des Hintergriffteils optimal ist, insbesondere die hintergriffene Fläche maximal ausfällt.

Vorzugsweise weist die Kupplung zwei diametral angeordnete Klauen auf, die in der Sicherungsposition in zwei komplementär ausgebildete Sicherungsnuten und in der Einführposition in zwei Einführnuten formschlüssig eingreifen, wobei die Einführnuten die Klauen nur teilweise aufnehmen. Dadurch, dass die Einführnuten die Klauen nur teilweise aufnehmen, lässt sich die Kupplung durch einen geringen Kraftaufwand aus der Einführposition in die Freigabeposition Stellen. Insbesondere können das Federelement und die Einführnuten derart ausgelegt sein, dass die Klauen durch blosses Verdrehen von der Einführposition in die Freigabeposition gestellt werden können. Aus dieser Position reicht ein Drehmoment aus, die Kupplung in die Einführposition zu stellen, in der sie durch die Federkraft selbstständig einschnappt. Eine besonders vorteilhafte Ausführungsform weist Stege zwischen den Sicherungsnuten und den Einführnuten mit einer Neigung auf, die derart dimensioniert ist, dass die Klauen aus der Freigabeposition in die Einführposition gleiten. Eine Neigung von beispielsweise 30' hat sich als besonders vorteilhaft erwiesen. Selbstverständlich kann diese Neigung auch grösser ausfallen, da das Gleitverhalten von verschiedenen Rahmenbedingungen wie Federkraft und/oder Material abhängt.

Vorzugsweise ist das Hintergriffteil durch einen Bolzens mit dem Anschlag verbunden, wobei das Hintergriffteil reibschlüssig oder kraftschlüssig und der Anschlag drehbar mit dem Bolzen verbunden sind. Der Bolzen weist an dem Hintergriffteil abgewandten Ende ein Drehmomentübertragungsmittel auf, das diesen zumindest teilweise radial überragt. Somit ist es dem Anwender möglich sowohl das Drehmoment zum Stellen zwischen den verschiedenen Einführpositionen, als auch die Kraft senkrecht zum Anschlag zum Stellen zwischen der Freigabeposition und einer Einführposition, durch den Bolzen einzubringen. Ausserdem stellt die reibschlüssige oder kraftschlüssige Verbindung zwischen dem Bolzen und dem Hintergriffteil eine einfache und handliche Montage des Befestigungselementes sicher. Zu Beginn des Befestigungsvorganges befindet sich die Kupplung in der Einführposition. In dieser Position wird das Befestigungselement durch den Anwender in die Montageschienenöffnung eingeführt bis der Anschlag die die Montageöffnung begrenzenden Ränder der Hohlkörperlängsseiten stirnaussenseitig beaufschlagt. Durch Aufbringen eines Drehmomentes auf das Drehmomentübertragungsmittel werden die Klauen aus den Einführnuten herausgedreht. In einer besonderen Ausführungsform weisen die Einführnuten dazu eine V-förmige Ausbildung auf. Die zwischen den Einführnuten und der Sicherungsnuten vorhandenen Stege führen die Klauen axial zum Bolzen. In den Sicherungsnuten schnappen die Klauen formschlüssig ein, und die Drehbewegung des Hintergriffteils ist blockiert. Das Befestigungselement ist in dieser Sicherungsposition mit der Montageschienen vorfixiert. Das heisst, das Hintergriffelement hintergreift die Halteränder optimal. Die reibschlüssige oder kraftschlüssige Verbindung zwischen Bolzen und Hintergriffteil ist derart ausgelegt, dass sich diese nun löst und der Bolzen durch das Drehmoment in das Hintergriffteil geschraubt wird. Da das Drehmomentübertragungsmittel zumindest teilweise den Bolzen radial überragt und insbesondere als Schraubenkopf ausgebildet ist, erfolgt dadurch ein Festklemmen der Montageschiene, insbesondere der Haltevorsprünge, zwischen dem Anschlag und dem Hintergriffteil, da der Anschlag vom Drehmomentübertragungsmittel axial zum Bolzen gegen das Hintergriffteil gedrückt wird.

Vorteilhafterweise ist das Federelement als ringförmige Unterlagsscheibe ausgebildet, welche auf der dem Hintergriffteil abgewandten Seite des Anschlags angeordnet ist, um das Federelement platzsparend und wirtschaftlich zu gestalten.

In einer anderen bevorzugten Ausführungsform ist das Federelement als zylinderförmige Drahtfeder ausgebildet, welche auf der dem Hintergriffteil abgewandten Seite des Anschlages angeordnet ist, um eine wirtschaftliche Herstellung sicherzustellen.

Vorzugsweise ist das Federelement als Kunststoffteil ausgebildet, welches auf der dem Hintergriffteil zugewandten Seite des Anschlages angeordnet ist, um eine möglichst geringe Ausdehnung des Befestigungselementes ausserhalb des Hohlkörpers zu gewährleisten.

Vorteilhafterweise entspricht der Abstand axial zum Bolzen zwischen dem Hintergriffteils und dem Anschlag höchstens der Erstreckung der Haltevorsprünge axial zum Bolzen. Somit ist sichergestellt, dass die Haltevorsprünge zwischen dem Hintergriffteil und dem Anschlag festklemmbar sind.

Vorteilhafterweise weisen der Anschlag und das Hintergriffteil jeweils einen hülsenförmigen Führungsteil auf, die miteinander in Eingriff bringbar sind, um eine Führung des Hintergriffteils gegenüber dem Anschlag sicherzustellen. Vorzugsweise sind die beiden Führungsteile ineinander schiebbar, weisen eine gemeinsame Mittelachse auf und sind relativ zueinander verdrehbar ausgebildet. Bei dieser weiteren Ausführungsform sind die beiden Führungsteile vorteilhafterweise im Bereich der Kupplung angeordnet, um eine einwandfreie Funktion derselben sicherzustellen.

Die Erfindung wird nachstehend anhand eines Ausführungsbeispieles näher erläutert. Es zeigen:
- Fig. 1: Eine erste Ausführungsform ohne Montageschiene im Querschnitt dargestellt;
- Fig. 2: das Hintergriffteil von Fig. 1 in einer vergrösserten Darstellung;
- Fig. 3: das Hintergriffteil der Fig. 2 um 90° gedreht dargestellt
- Fig. 4: bis 7 Darstellung eines Montageablaufs mit dem in Fig. 1 dargestellten Befestigungselement
- Fig. 8: das in Fig. 1 dargestellte Befestigungselement mit einer Spiralfeder;
- Fig. 9: eine perspektivische Ansicht einer weiteren Ausführungsform ohne Montageschiene.

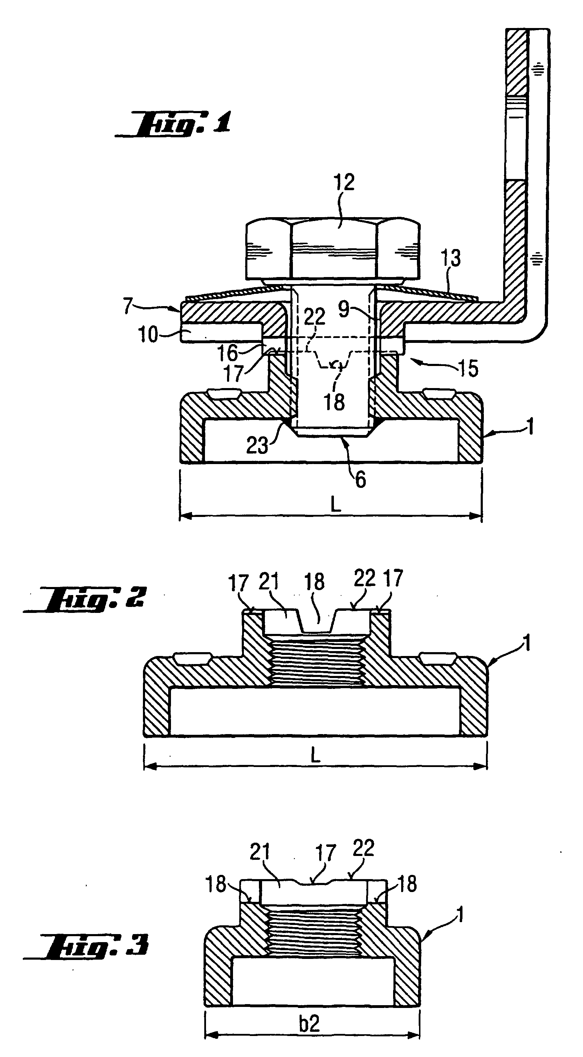

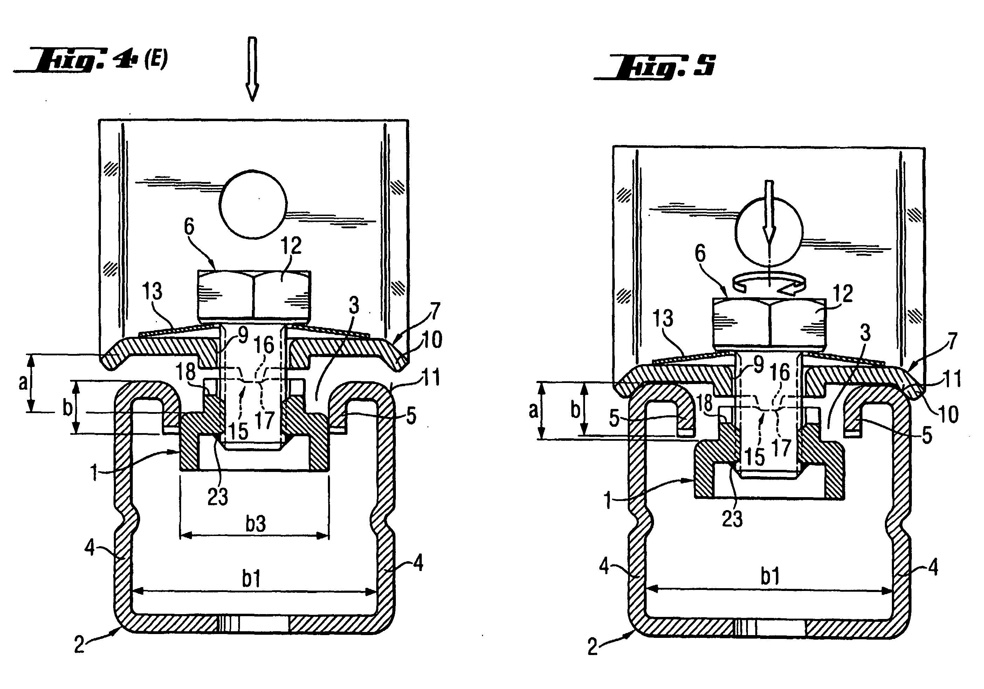

In den Fig.1 bis 8 ist ein erfindungsgemässes Befestigungselement mit einem Hintergriffteil 1, das in eine Montageöffnung 3 eines insgesamt mit 2 bezeichneten Hohlkörpers einführbar ist dargestellt. Der Hohlkörper 2, insbesondere eine C-förmige Montageschiene, weist an gegenüberliegenden Hohlkörperlängsseiten 4 innenseitig vorgesehene Haltevorsprünge 5 auf, die vom Hintergriffteil 1 hintergriffen werden.

Das Hintergriffteil 1 ist durch einen, mit einem Aussengewinde versehen Bolzen 6 mit einem die die Montageöffnung 3 begrenzenden Ränder der Hohlkörperlängsseiten 4 beaufschlagenden Anschlag 7 verbunden. Die Ausbildung des Hintergriffteils 1 ist im wesentlichen topfförmig, wobei die Länge L des Hintergriffteils 1 etwa dem Abstand b1 der gegenüberliegenden Hohlkörperlängsseiten 4 des Hohlkörpers 2 entspricht. Um eine optimale Führung des Hintergriffteils 1 in der Montageöffnung 3 während dem Einführvorgang zu gewährleisten entspricht die Breite b2 des Hintergriffteil 1 etwa dem Abstand b3 der beiden Haltevorsprünge 5.

Der Anschlag 7 wird in dieser Ausführungsform durch ein Winkelelement gebildet. Der Anschlag weist zur Führung des Bolzens 6 eine Durchgangbohrung 9 auf deren Durchmesser etwa dem Aussendurchmesser des Bolzens 6 entspricht. Der Anschlag 7 ist zum Bolzen 6 axial verschieblich gelagert. Zur Verdrehsicherung gegenüber dem Hohlkörper 2 weist der Anschlag 7 Abwinkelungen 10 auf, die in komplementär ausgebildete Abrundungen 11 des Hohlkörpers 2 bringbar sind.

Der Bolzen 6 weist an dem dem Hintergriffteil 1 abgewandten Ende eine Drehmomentüber tragungsmittel 12, insbesondere einen Schraubenkopf, auf. Zwischen dem Drehmomentübertragungsmittel 12 und dem Anschlag 7 ist ein vorgespanntes Federelement 13, insbesondere eine gekrümmte Unterlagsscheibe, angeordnet.

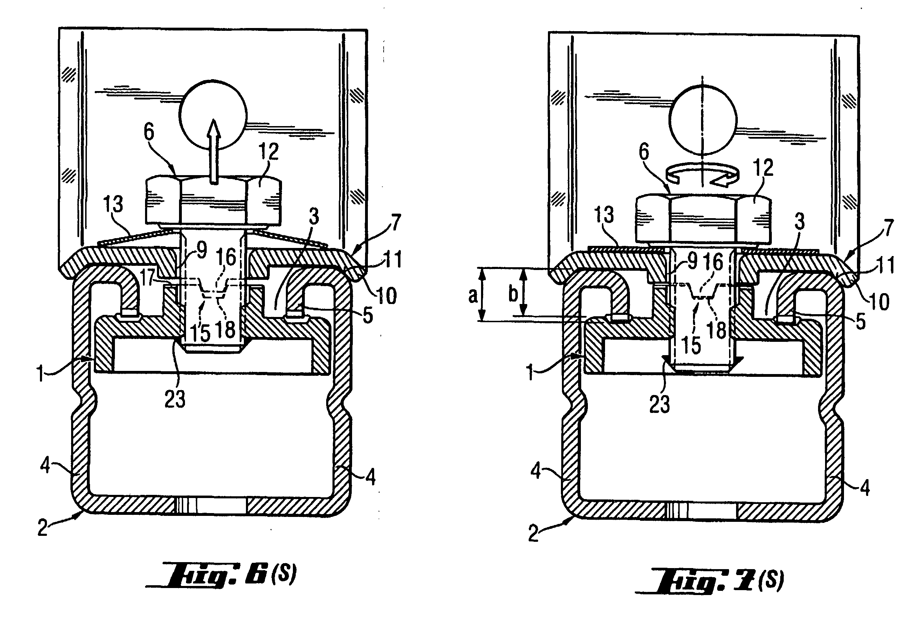

Der Anschlag 7 und das Hintergriffteil 1 sind durch eine, insgesamt mit 15 bezeichneten, Kupplung miteinander verbunden. Der Anschlag 7 weist zwei diametral angeordnete Klauen 16 auf, die am Hintergriffteil 1 angeordnete Nuten 17,18 bringbar sind. Das Federelement 13 verspannt das Hintergriffteil 1 und den Anschlag 7 gegeneinander. Das Hintergriffteil 1 weist je zwei diametral angeordnete Nutenpaare auf, zwei Einfühmuten 17 und zwei Sicherungsnuten 18. Die zueinander diametral angeordneten Sicherungsnuten 18 sind komplementär zu den Klauen 16 ausgebildet und nehmen diese ganz auf. Im Gegensatz dazu weisen die Einführnuten axial zum Bolzen 6 eine geringe Erstreckung auf, sodass die Klauen mittels eines Drehmomentes aus den Einführnuten 17 gedreht werden können, jedoch sich nicht beispielsweise beim Transport oder dergleichen unbeabsichtigt auskuppeln. Die Einfühmuten 17 sind gegenüber den Sicherungsnuten 18 je um einen Winkel von 90° versetzt angeordnet. Somit kann Hintergriffteil 1 in der Einführposition, wie sie insbesondere in Fig. 3 gezeigt wird, durch die Montageöffnung 3 in den Hohlkörper 2 eingeführt werden.

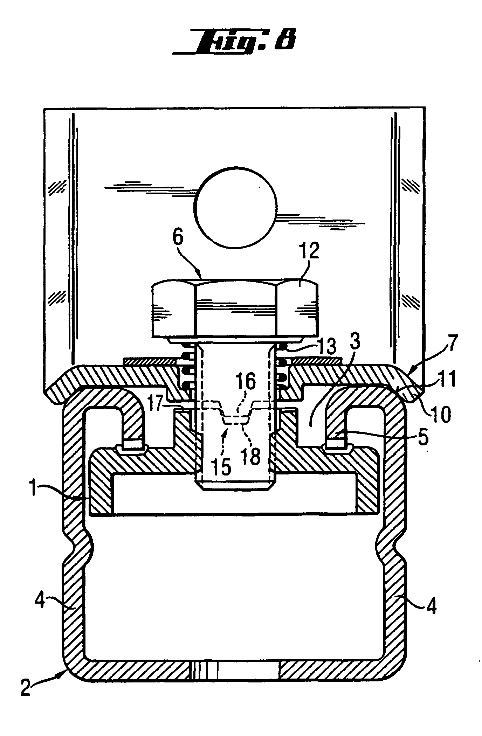

Die Fig. 4 bis 7 zeigen den Montagewinkel im Montagevorgang.

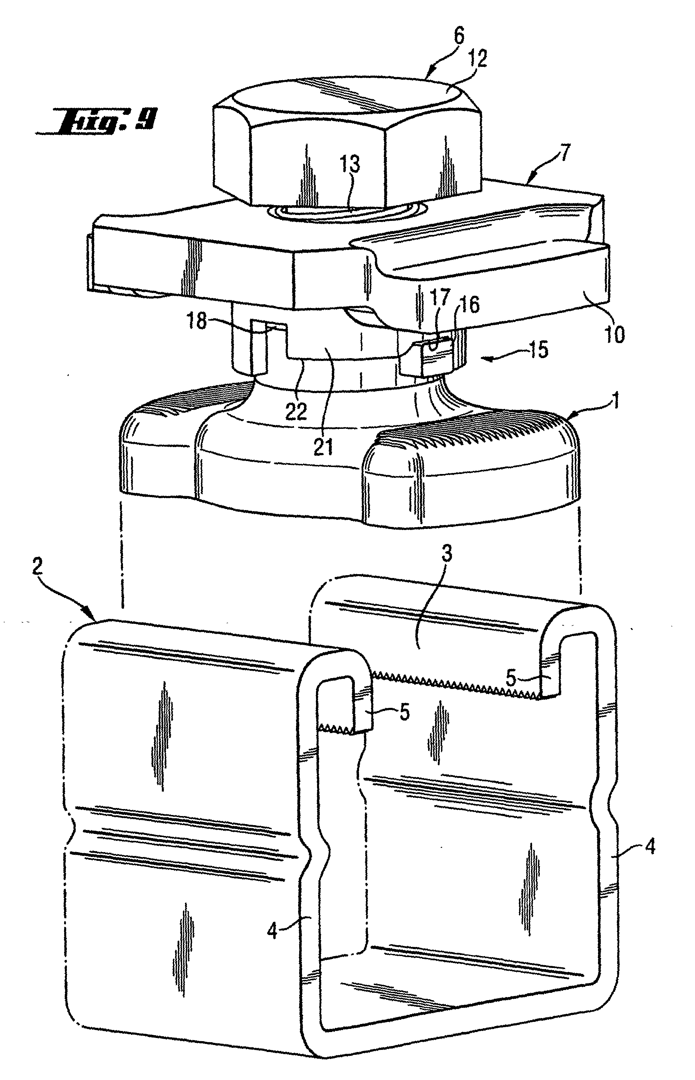

In Fig. 4 wird das erfindungsgemässe Befestigungselement durch die Montageöffnung 3 des Hohlkörpers 2 in den Innenraum Hohlkörper 2 eingeführt. Die zwischen dem Hintergriffteil 1 und dem Anschlag 7 wirkende Kupplung 15 ist zwischen einer Einführposition E, wie sie in Fig. 4 dargestellt ist und einer Sicherungsposition S wie sie insbesondere in Fig. 6 und 7 dargestellt ist, stellbar. In der Einführposition E befinden sich die Klauen 16 in Eingriff mit zwei diametral angeordneten Einführnuten 17.

Durch Aufbringen einer Kraft F axial zum Bolzen wird die Kupplung 15 aus einer Eingriffsposition E, wie sie insbesondere in Fig. 4, 6 und 7 dargestellt ist, in eine Freigabeposition, welche insbesondere in Fig. 5 dargestellt ist, gestellt. Dadurch ist der Formschluss zwischen den Klauen 16 und den Einführnuten 17 aufgehoben. Durch Verdrehen des Bolzens 6 gegenüber dem Hohlkörper 2 in der Freigabeposition der Kupplung 16 ist das Hintergriffteil 1 in eine Position bringbar, in der es die Haltevorsprünge 5 des Hohlkörpers 2 hintergreift. Zwischen den Nutenpaaren 17, 18 sind Stege 21 angeordnet die zur Führung des Hintergriffteils 1 in der Freigabeposition der Kupplung 16 dienen. Damit ist in der Freigabeposition der Kupplung 15 ausserhalb der Axialprojektion der Nutenpaare 17, 18 keine Kraft F axial zum Bolzen 6 mehr nötig, da die Klauen 16 durch die Stege 21 mittels einer Lauffläche 22 geführt ist. Das Federelement 13 drückt die Klauen 16 in der Freigabeposition gegen die Lauffläche 22.

Liegen die Klauen 16 im Axialprojektionsbereich der Sicherungsnuten 18, so schnappt die Kupplung 15 formschlüssig ein, wie dies insbesondere in Fig. 6 und 7 dargestellt ist. Die Kupplung 15 befindet sich in der Sicherungsposition. Weiteres Verdrehen des Bolzens 6 führt dazu, dass die kraftschlüssige Verbindung 23 zwischen dem Bolzens 6 und dem Hintergriffteil 1 überwunden wird und der Anschlag 7 entgegen dem Hintergriffteit 1 bewegt wird. Dadurch werden die Haltevorsprünge 5 zwischen Anschlag 7 und Hintergriffteil 1 verspannt, wie dies insbesondere aus Fig. 7 hervorgeht. Aus Fig.6 ist ersichtlich, dass die Klauen 16 noch nicht vollkommen in den Sicherungsnuten 18 aufgenommen sind. Erst das weitere Verdrehen überbrückt diesen Abstand und führt in die Endposition, wie sie in Fig. 7 dargestellt, ist.

In der Fig. 8 ist das Befestigungselement mit einer zylinderförmige Drahtfeder als vorgespanntes Federelement 13 ausgeführt. Anstelle einer zylinderförmigen kann auch eine konisch ausgebildete Drahtfeder verwendet werden.

In den Fig. 9 ist eine weitere Ausführungsform eines erfindungsgemässenBetestigungselements mit einem Hintergriffteil 1 und einem Anschlag 7, die durch eine Schraube 6 gegeneinander verschraubbar sind, mit dem schon in den Fig. 1 bis 8 wiedergegebenen Hohlkörper 2 dargestellt. Analog zu der in Fig. 1 dargestellten Ausführungsform ist das Hintergriffteil 1 durch eine Kupplung 15 mit dem Anschlag 7 verbunden. Im Gegensatz zur der in Fig. 1 dargestellten Ausführungsform, weisen der Hintergriffteil 1 und der Anschlag 7, im Bereich der Kupplung 15, jeweils eine hülsenförmige Erweiterung 18, 21 auf, die miteinander in Eingriff sind. Die beiden hülsenförmigen Erweiterungen 18, 21 sind zueinander koaxial angeordnet und dienen zur Führung des Hintergriffteils 1 gegenüber dem Anschlag 7 in Bezug auf die gemeinsame Mittelachse. Der Aussendurchmesser der ersten hülsenförmigen Erweiterung 18 des Hintergriffteils 1 entspricht etwa dem Innendurchmesser der zweiten hülsenförmigen Erweiterung 21 des Anschlags, um eine möglichst präzise Führung zu gewährleisten.

## Patentansprüche

1. Befestigungselement mit einem Hintergriffteil (1), welches in eine Montageöffnung (3) eines Hohlkörpers (2) einführbar und im Hohlkörperninnern derart verdrehbar ist, dass das Hintergriffteil (1) an gegenüberliegenden Hohlkörperlängsseiten (4) innenseitig vorgesehene Haltevorsprünge (5) hintergreift, sowie mit zumindest einen Anschlag (7), welcher die die Montageöffnung (3) begrenzenden Ränder der Hohlkörperlängsseiten (4) stirnaussenseitig beaufschlagt und welche mit dem Hintergriffteil (1) verbunden ist und durch ein senkrecht zum Anschlag (7) wirkendes, vorgespanntes Federelement (13) gegenüber dem Hintergriffteil (1) unter Überwindung der Federkraft elastisch gelagert ist, **dadurch gekennzeichnet, dass** der Anschlag (7) ein Kupplungsteil und das Hintergriffteil (1) eine Gegenkupplungsteil aufweist, die lösbar drehfest miteinander verbindbar eine Kupplung (15) bilden, wobei
die Kupplung (15) Klauen (16) und Nuten (17, 18) aufweist, die in einer Eingriffsposition (E) formschlüssig zusammenwirken und durch eine Relativbewegung, senkrecht zum Anschlag (7), zwischen einer Freigabeposition und zumindest einer Eingriffsposition (E) stellbar sind, wobei die Kupplung (15) im Ruhezustand, mittels des Federelementes (13), in einer Eingriffsposition (E) gehalten wird, und wobei die Kupplung (15) zumindest zwei Eingriffspositionen aufweist, eine Einführposition (E) und eine Sicherungsposition (S), wobei der Abstand (a) zwischen Anschlag (7) und Hintergriffteil (1) in der Einführposition (E) zumindest der Erstreckung (b) der Haltevorsprünge (5) senkrecht zum Anschlag (7) und in der Sicherungsposition (S) höchstens der Erstreckung (b) entspricht.

2. Befestigungselement nach Anspruch 1, **dadurch gekennzeichnet, dass** die Kupplung (15) zwei diametral angeordnete Klauen (16) aufweist, die in der Sicherungsposition (S) in zwei komplementär ausgebildete Sicherungsnuten (18) und in der Einführposition (E) in zwei Einführnuten (17) formschlüssig eingreifen, wobei die Einführnuten (17) die Klauen (16) nur teilweise aufnehmen.

3. Befestigungselement nach Anspruch 1 oder 2, **dadurch gekennzeichnet, dass** das Hintergriffteil (1) durch einen Bolzens (6) mit dem Anschlag (7) verbunden ist, wobei das Hintergriffteil (1) reibschlüssig oder kraftschlüssig und der Anschlag (7) drehbar mit dem Bolzen (6) verbunden ist, der an dem Hintergriffteil (1) abgewandten Ende ein Drehmomentübertragungsmittel (12) aufweist, das diesen zumindest teilweise radial überragt.

4. Befestigungselement nach einem der Ansprüche 1 bis 3, **dadurch gekennzeichnet, dass** das Federelement (13) als ringförmiger Unterlagsscheibe ausgebildet ist, welche auf der dem Hintergriffteil (1) abgewandten Seite des Anschlags (7) angeordnet ist.

5. Befestigungselement nach einem der Ansprüche 1 bis 3, **dadurch gekennzeichnet, dass** das Federelement als zylinderförmige Drahtfeder ausgebildet ist, welche auf der dem Hintergriffteil (1) abgewandten Seite des Anschlages (7) angeordnet ist.

6. Befestigungselement nach einem der Ansprüche 1 bis 3, **dadurch gekennzeichnet, dass** das Federelement als Kunststoffteil ausgebildet ist, welches auf der dem Hintergriffteil (1) zugewandten Seite des Anschlages (7) angeordnet ist.

## Claims

1. Fastening element comprising a rear engagement part (1) which can be inserted into a mounting opening (3) in a hollow part (2) and can be twisted in the interior of the hollow part in such a manner that the rear engagement part (1) engages behind retaining projections (5) provided on the inner faces of opposing longitudinal sides (4) of the hollow part, and comprising at least one stop (7) which acts upon the outer end faces of the edges of the longitudinal sides (4) of the hollow part delimiting the mounting opening (3), is connected to the rear engagement part (1) and is resiliently supported with respect to the rear engagement part (1) by a preloaded spring element (13) acting perpendicularly to the stop (7), while overcoming the spring force, **characterised in that** the stop (7) has a coupling part and the rear engagement part (1) has a counter coupling part which can be releasably connected together in a torsion-resistant manner in order to form a coupling (15), wherein the coupling (15) has claws (16) and slots (17, 18) which cooperate in a positive manner in an engagement position (E) and can be adjusted between a release position and at least one engagement position (E) by a relative movement perpendicular to the stop (7), the coupling (15) being held in an engagement position (E) by means of the spring element (13) in the non-operative state, and wherein the coupling (15) has at least two engagement positions, namely an insertion position (E) and a locking position (S), the distance (a) between the stop (7) and the rear engagement part (1) corresponding at least to the extent (b) of the retaining projections (5) perpendicular to the stop (7) in the insertion position (E) and at most to the extent (b) in the locking position (S).

2. Fastening element according to claim 1, **characterised in that** the coupling (15) has two diametrically arranged claws (16) which engage positively in two complementary locking slots (18) in the locking position (S) and in two insertion slots (17) in the insertion position (E), the insertion slots (17) only partially receiving the claws (16).

3. Fastening element according to claim 1 or claim 2, **characterised in that** the rear engagement part (1) is connected by means of a bolt (6) to the stop (7), the rear engagement part (1) being connected in a frictional or non-positive manner and the stop (7) in a rotatable manner to the bolt (6) provided at its end directed away from the rear engagement part (1) with a torque-transmitting means (12) projecting at least partially radially beyond it.

4. Fastening element according to one of claims 1 to 3, **characterised in that** the spring element (13) is in the form of an annular washer arranged on the side of the stop (7) directed away from the rear engagement part (1).

5. Fastening element according to one of claims 1 to 3, **characterised in that** the spring element is in the form of a cylindrical wire spring arranged on the side of the stop (7) directed away from the rear engagement part (1).

6. Fastening element according to one of claims 1 to 3, **characterised in that** the spring element is in the form of a plastic part arranged on the side of the stop (7) directed towards the rear engagement part (1).

## Revendications

1. Élément de fixation avec une pièce de retenue arrière (1) qui peut être introduite dans une ouverture de montage (3) d'un corps creux (2) et peut être tournée à l'intérieur du corps creux, de façon que la pièce de retenue arrière (1) s'engage derrière des saillies de retenue (5) prévues côté intérieur sur des côtés longitudinaux opposés de corps creux (4) ainsi qu'avec au moins une butée (7) qui vient en contact frontalement avec les bords des côtés longitudinaux de corps creux (4) délimitant l'ouverture de montage (3) et qui est reliée à la pièce de retenue arrière (1) et est montée élastiquement, au moyen d'un élément de ressort précontraint (13) agissant perpendiculairement à la butée (7), par rapport à la pièce de retenue arrière (1) en surmontant la force élastique, **caractérisé en ce que** la butée (7) comporte une pièce d'accouplement et la pièce de retenue arrière (1) une pièce d'accouplement antagoniste, lesquelles peuvent être solidarisées en rotation entre elles de manière détachable et forment un moyen d'accouplement (15), le moyen d'accouplement (15) comportant des dents (16) et des rainures (17, 18) qui, dans une position engagée (E), coopèrent par complémentarité de formes et peuvent être positionnées par un déplacement relatif perpendiculaire à la butée (7) entre une position dégagée et au moins une position engagée (E), le moyen d'accouplement (15) étant maintenu en position de repos dans une position engagée (E) au moyen d'un élément de ressort (13), et le moyen d'accouplement (15) possédant au moins deux positions engagées, une position introduite (E) et une position bloquée (S), la distance (a) entre la butée (7) et la pièce de retenue arrière (1) correspondant, en position introduite (E), au moins à l'extension (b) des saillies de retenue (5) perpendiculairement à la butée (7) et, en position bloquée (S), au plus à l'extension (b).

2. Élément de fixation selon la revendication 1, **caractérisé en ce que** le moyen d'accouplement (15) comporte deux dents disposées diamétralement (16) qui pénètrent par complémentarité de formes, en position bloquée (S), dans deux rainures de blocage de conformation complémentaire (18) et, en position introduite (E), dans deux rainures d'introduction (17), les. rainures d'introduction (17) ne recevant les dents (16) que partiellement.

3. Élément de fixation selon la revendication 1 ou 2, **caractérisé en ce que** la pièce de retenue arrière (1) est reliée à la butée (7) par l'intermédiaire d'un goujon (6), la pièce de retenue arrière (1) étant reliée au goujon (6) par friction ou par conjugaison de forces et la butée (7) y étant à rotation, ledit goujon (6) comportant, à l'extrémité orientée à l'opposé de la pièce de retenue arrière (1), un moyen de transmission du couple (12) qui dépasse de celui-ci au moins partiellement dans le sens radial.

4. Élément de fixation selon une des revendications 1 à 3, **caractérisé en ce que** l'élément de ressort (13) est conformé en rondelle annulaire qui est disposée sur le côté de la butée (7) orienté à l'opposé de la pièce de retenue arrière (1).

5. Élément de fixation selon une des revendications 1 à 3, **caractérisé en ce que** l'élément de ressort est conformé en ressort à boudin cylindrique qui est disposé sur le côté de la butée (7) orienté à l'opposé de la pièce de retenue arrière (1).

6. Élément de fixation selon une des revendications 1 à 3, **caractérisé en ce que** l'élément de ressort est conformé en pièce en matière plastique, laquelle est disposée sur le côté de la butée (7) tourné vers la pièce de retenue arrière (1).
